# EUROPEAN PATENT APPLICATION

(11) **EP 3 059 687 A1**
(43) Date of publication of application: **24.08.2016**
(21) Application number: 16152917.7
(22) Date of filing: 27.01.2016
(51) Int. Cl.: G06F 21/10

(54) **DISTRIBUTION OF DIGITAL MEDIA FILES**

(30) Priority: 18.02.2015 GB 201502684
(71) Applicant: The Panama Bureau Limited, London SW14 8TN (GB)
(72) Inventor: MOHACS, Alex, London, SE1 9PD (GB)
(74) Representative: MacLean, Martin David

(57) **Abstract**

Methods and systems are described for preparing digital media files containing visual and/or audio information for distribution, and for sharing the files so as to prevent unauthorised use and/or distribution. The method comprises: copying the digital media file to create a second media file; selecting at least one part of the second digital media file; removing the at least one part from the remainder of the second digital media file; processing the at least one part so as to obfuscate or camouflage the information therein, and inserting the at least one processed part into the remainder of the second digital media file to create a camouflaged digital media file. A unique identifier and a Call to Action ("CTA") interface containing predetermined requirements for a third party to be allowed access to the first digital media file are added to the camouflaged digital media file; the CTA interface is adapted to direct a third party to the first digital media file if or once the third party has satisfied the requirements.

## Description

### FIELD OF THE INVENTION

The present invention relates to systems and methods for preparing digital media files for distribution and for distribution thereof which facilitate digital rights management.

### BACKGROUND ART

Digital rights management (DRM) is a systematic approach to copyright protection for digital media which are, typically, circulated *via* the internet. As used herein, the terms "digital media" and "digital media file" are intended to encompass any form of visual and/or audio data which is in digital form (e.g. films, photographs, text, diagrams, databases, music, audio recordings, etc.) and which are recorded in any digital format. The purpose of DRM is to prevent unauthorised executing, viewing, copying, printing, altering and redistribution of digital media. Digital rights management systems generally comprise technologies for access control and rights validation to manage usage of digital media, so as to offer a broad range of offerings and choices to meet the different needs of consumers. Publishers may want to limit the number of times a movie may be viewed, or to limit the number of times a particular media may be copied. As an alternative to access control DRM systems, Conventionally, DRM systems protect the digital media by restrictive licensing agreements which control access to digital media, and/or by encrypting the digital media so that it can only be accessed by authorised users, and/or by applying a digital watermark to the content or similar method, so that the distribution of the content can be tracked and controlled.

Licensing agreements are usually effective only to prevent initial access to digital material; by themselves such schemes cannot practically prevent the unauthorised copying and redistribution of digital media. Even though licensing schemes provide a deterrent against unauthorised use, in that they provide a legal right of action against those who transgress the licensing provisions, the deterrent effect is limited in scope to licensees. Licensing agreements are relatively ineffective at preventing further unauthorised use by third parties who are not bound by the agreement.

The encryption of digital media is a widespread DRM technique; it normally requires users to have encryption software, or a combination of software and hardware. Encryption of digital media is often not sufficiently strong because of the need to limit the amount of bandwidth and/or processing necessary (which can be a particularly significant factor where the digital media is large/extensive, as in the case of a film/movie for example), or to enable users with less sophisticated computer equipment to access it. Software-only encryption is vulnerable because it is always open to attack by hackers, and once any encryption software has been widely distributed and become widely used its attraction to hackers is increased. Also, because most encryption techniques are practised on the original digital data, it cannot be guaranteed that that original data cannot be extracted from the encrypted version. Software and hardware encryption systems may be less vulnerable to attack than software-only solutions, however they are less appealing to consumers as there is no standard system which can be used for all forms of media, and they require the consumer to pay for a separate piece of hardware to use alongside his/her existing computer. And, hardware-implemented encryption systems are suited only to stationary, or "desktop", applications; they are unsuited for use with mobile devices.

Digital watermarks are features of media that are added during production or distribution, they involve data that can be steganographically embedded within audio or video data. Digital watermarks do not provide comprehensive DRM protection, because they do not prevent unauthorised access or copying of digital media, but are used as a means of enforcing copyright, by tracking distribution of digital media once unauthorised access or copying has occurred.

### SUMMARY OF THE INVENTION

We see a need for a way to allow digital media to be distributed relatively freely, across all types of devices and in all formats (proprietary and freeware) and of all forms of digital media, but which is not so vulnerable to attack as are many encryption techniques and which provides more of the advantages of licensing agreements and digital watermarks but fewer of their disadvantages. We have devised new methods, as defined in the claims, of handling data; these methods facilitate certain internet-related business methods (but do not define a business method per se), and are accompanied by a novel graphical user interface (GUI).

The present invention therefore provides a method of preparing a first digital media file containing visual and/or audio information for distribution and use by a human user, the method comprising:
i. copying the digital media file to create a second media file;
ii. selecting at least one part of the second digital media file;
iii. removing the at least one part from the remainder of the second digital media file;
iv. processing the at least one part so as to camouflage the information therein, and
v. inserting the at least one processed part into the remainder of the second digital media file to create a camouflaged digital media file, at least one part of which is camouflaged and which occupies the same position from which it was removed.

Such an arrangement goes a long way towards meeting the needs set out above. Because it involves removing the original data before processing it to camouflage it, the camouflage can be as effective as encryption but less vulnerable to being "hacked" or "cracked" because the camouflaged media is irrevocably transformed from the original. Moreover, the camouflaged part may be processed in such a way that it becomes smaller than the original version, which advantageously reduces bandwidth/transmission requirements. The term "camouflage" is used herein synonymously with 'obfuscate', so as to denote either altering the content of the digital media so that the information it conveys is disguised to a human user, so that its general or outline nature can be recognised but not its detail, or rendering the content substantially or completely unintelligible to a human user. To explain further what we intend by the term "camouflage" it is necessary to consider the different types of digital media involved: we classify these digital media as either "visual" or "audio". Visual digital media includes both any form of moving image (e.g. video, film, etc.) and any form of static image (e.g. pictures, diagrams, presentations, text, data/databases, etc.); audio digital media includes anything where the majority of the information is in audible form, such as music, audio recordings and the like. The part or parts of moving images and audio which is/are camouflaged may comprise a timed sequence of a small part of the overall content (e.g. a succession of individual video frames or sounds), whilst in the case of a static image a portion of the picture, diagram, etc., or a section of text (a phrase, sentence, paragraph, chapter, etc.) or of data may be obscured. The camouflaged part is inserted into the second digital media file at same time, place or position from which it was originally removed, so that a user accessing the second digital media file views a video file or hears an audio file with the camouflaged part or parts occurring at the same point(s) in the timeline of the video or audio as the uncamouflaged part or parts occur in the first digital media file (or, when accessing the second digital media file of a static image, experiences the camouflaged part or parts at the same point(s) in the static image as the uncamouflaged part or parts occur in the first digital media file), so that the camouflaged part occupies the same position in the second digital media file as it did prior to removal and processing. It is envisaged that only a part or parts of the digital media file will be camouflaged, but in some instances the whole of the file may be camouflaged. The camouflaging of visual digital media may comprise blurring, frosting, masking, overlaying, contrast or resolution reduction, or any form of distortion, obfuscation or disguise, or any combination of these techniques. Audio digital media may be camouflaged by substantially reducing the fidelity of the audio content, such as by muting (substantially or completely), distortion, replacement or overlaying of another sound, or combinations of these. Specific examples of camouflaging are given below in connection with the drawings. The camouflaged digital media file can be distributed relatively freely, and third parties can access the content but they can only properly or completely see and/or hear those parts of the file which are not camouflaged; they may be able to partially see and/or hear the part(s) which is/are camouflaged, or at least to see/hear that they exist, but the camouflaged parts will not be clearly intelligible. Thus a third party accessing the camouflaged file will appreciate that there is content in the camouflaged portions of the file. The person camouflaging the file will therefore be able to arouse interest in the digital media, by allowing unfettered access to large parts of the file, but by camouflaging key or important parts of the file will be able to retain control over the original content, so that third parties wishing to access the entire original content will need to seek access to the first digital media file, which can remain separate from the camouflaged file so as to control access thereto. Of course, digital media often consist of a combination of visual and audio content (such as text and a spoken version, audio with a transcript or a film with soundtrack and a transcript), and in implementing this invention it is advantageous to ensure that these media are synchronised, so that any camouflaging is carried out on the same parts of the media; synchronous camouflaging of all media combinations which are associated by virtue of their content is a default option, it may be preferred not to camouflage all of them (for example, camouflaging visual content whilst leaving audio uncamouflaged might be desirable, a user hearing the sound of a game of football may be intrigued enough to want to access the visual data also). Where in what follows we use the terms "display" or "displaying", these terms embrace both the exhibition of visual information and also the presentation of audio information, together or separately; the terms are not limited to a solely visual display. To facilitate the seamless presentation of the relevant media version, the media may be presented to users inside a bespoke multimedia access application, or "digital media access interface" (which we refer to as a "fraim", as will be described further below).

A Call to Action ("CTA") interface, which comprises requirements for third parties who wish to access the first digital media file, may be applied to or embedded in the camouflaged digital media file. A unique identifier may be applied to the camouflaged digital media file, to the CTA interface and/or the fraim, and is preferably permanently associated with or embedded in it/them. This allows the tracking of the viewers, the version of the media file accessed, the CTA satisfied, the network location from which the media file was accessed and the fraim which was used, as will be described further below.

The unique identifier in combination with the CTA interface facilitates the commercial distribution of digital media files (as will be described further below); it provides a method of sharing a first digital media file containing visual and/or audio information with third parties through a network, the method comprising: preparing a camouflaged digital media file as set out above; storing the first digital media file separately from the camouflaged digital media file, allowing unrestricted access to the camouflaged second digital media file via a digital media interface, presenting a viewer of the camouflaged digital media file with the CTA requirements and, only when these have been satisfied, allowing the viewer restricted access to the first digital file, *via* the digital media access interface.

With such an arrangement, a digital media creator or owner is able to upload original digital media, create a second camouflaged version of the original digital media, apply a CTA to the second camouflaged version of the original digital media, distribute the camouflaged digital media file freely across a network or the internet inside a fraim, which will present the CTA and provide access to the first digital media file only when the third party has satisfied the requirements of the CTA. In satisfying the CTA requirements the unique identifier(s) can be recorded. Because access to all digital media and CTA functionality (the original uncamouflaged media, the camouflaged version and access control CTA) is accessed only through the fraim, and because a unique identifier is applied to each instance of a fraim, the system is able to track how third parties became interested in the content, which is advantageous where a creator or owner of digitised content allows others to promote that content on their own webpages, websites and the like in the return for a share of any revenue, as will be described further below. The digital media access interface may be effective to restrict access so as to permit only access, and to prohibit third party copying of the digital media file, in whole or in part, and/or to prevent third parties from identifying the location of the first digital media file, thus protecting the rights of the owner/creator of the content and facilitating commercialisation of the content. At the point when a third party chooses to satisfy a CTA requirement, the digital media access interface may also apply the third party's identity (such as the IP address of the third party) as an indelible "watermark", or in some other form associated with the media content (such as in the digital media access interface) which is not visible to the third party; this enables any misuse of the content (its appearance on an unauthorised website, for example) to be tracked down to its origin, namely the third party who satisfied the CTA.

The digital media access interface is adapted to display the camouflaged digital media file and to replace this display by displaying the first digital media file when the predetermined requirements have been met. The effect is such that a viewer will first see the second camouflaged media version and, when selecting the camouflaged media will be presented with a CTA which they can either satisfy or skip. If the viewer satisfies the CTA the second camouflaged version of the media will be replaced by the first uncamouflaged version of the media - this can be done by the digital media access interface "refreshing", so the process is nearly seamless to a viewer. If the CTA is skipped the viewer will be redirected to the uncamouflaged portion of the media. The CTA may require input from a third party (e.g. the third party may need to make a payment, to give information or to answer questions when prompted, etc.) in order to redirect the third party to the uncamouflaged first digital media file, or the CTA interface may be adapted to sense attributes of the third party before redirecting the third party to the uncamouflaged first digital media file; in the latter case, it may be that access to the content is to be allowed for third parties who meet certain technical requirements, for example being members of a particular network, such as members of an academic institution, being in a particular geographical location, such as individuals in a particular town or region, or having some common attribute other than is associated with the third party's IP address which the CTA interface is programmed to recognise as a criterion permitting access to the uncamouflaged digital media file. It may be advantageous for the first and second digital media access interfaces to appear similar to third parties (though they may have functional differences); this means that third parties accessing the digital media rapidly become familiar with the system, and do not have to remember or even know which interface they are viewing at any time (though this would be implicit from the presence or absence of camouflaged content, and/or from the different functionality which may be available - e.g. the freedom to copy the camouflaged digital media file, but not the uncamouflaged first digital media file.

The present invention also provides systems and apparatus set up or programmed to execute methods in accordance with the invention, and also a computer readable medium carrying a program to execute the methods.

### BRIEF DESCRIPTION OF THE DRAWINGS

The invention will now be described by way of example and with reference to the accompanying figures, in which;
Figure 1 is an outline illustration of a GUI for presenting digital media content in accordance with the invention;
Figure 2a is an illustration of the GUI of Figure 1 in the process of presenting a video file;
Figure 2b is the GUI of Figure 2a illustrating the presentation of camouflaged video content;
Figure 2c is the GUI of Figure 2b showing the Call to Action (CTA) which a user must satisfy to be able to access the uncamouflaged content in the first digital media file;
Figure 3 is the GUI of Figure 1 illustrating the presentation of camouflaged text content and showing the associated CTA;
Figure 4 is the GUI of Figure 1 illustrating the presentation of camouflaged audio content and showing the associated CTA;
Figures 5a to 5d are illustrations of another GUI suitable for presenting digital media content in accordance with the invention, showing the interface as it appears to a user during the camouflaging of a digital media file;
Figure 6 is a flow diagram showing the CTA interface process;
Figure 7 is a flow diagram illustrating the process of uploading a file using a system in accordance with the invention, and
Figure 8 is a flow diagram showing the revenue sharing process of the invention.

### DETAILED DESCRIPTION OF THE EMBODIMENTS

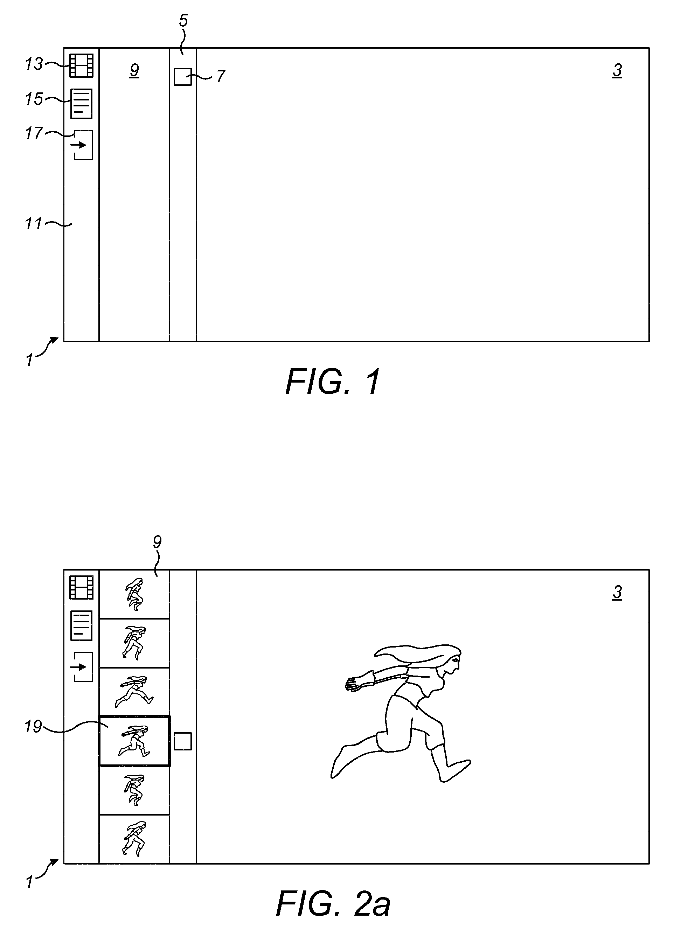

Figure 1 shows an exemplary GUI interface 1 for displaying digital media content in accordance with the invention; the interface 1 is a type of frame, which we will refer to as a "fraim" to distinguish it from other frames. The main part of the fraim is a content window 3 for displaying visual content. Down the left hand side of the content window 3 is a timeline 5 and a timeline marker 7 which operate in conventional fashion as the content of the digital media file plays in the window 3 (the marker 7 moves progressively downwardly as the content plays). To the left of the timeline 5 is an auxiliary window 9 and to the left of that a toolbar 11. The toolbar contains icons for a user to use to select various actions such as an icon 13 to display film in window 3, an icon 15 to display text, such as a transcript of a video, in window 3, and an icon 17 for displaying or hiding window 9; other icons may be provided, such as for accessing a "call to action" (CTA), for maximising the size of the fraim in a display, for sharing the fraim on social media, for searching, and so on. Window 9 is for displaying key frames of the content displayed in window 3, and is useful for identifying the current location being displayed in window 3 in the context of the content, and for allowing a user to navigate rapidly between key parts of the content. Window 9 may alternatively display icons relating to administrative or other functions which are made accessible if the user is logged in as an administrator or in some other role (such as an uploader of content). Figures 2a to 2d, 3 and 4 include elements common with those specifically shown in Figure 1, however for clarity the reference numerals are not necessarily shown in these later Figures.

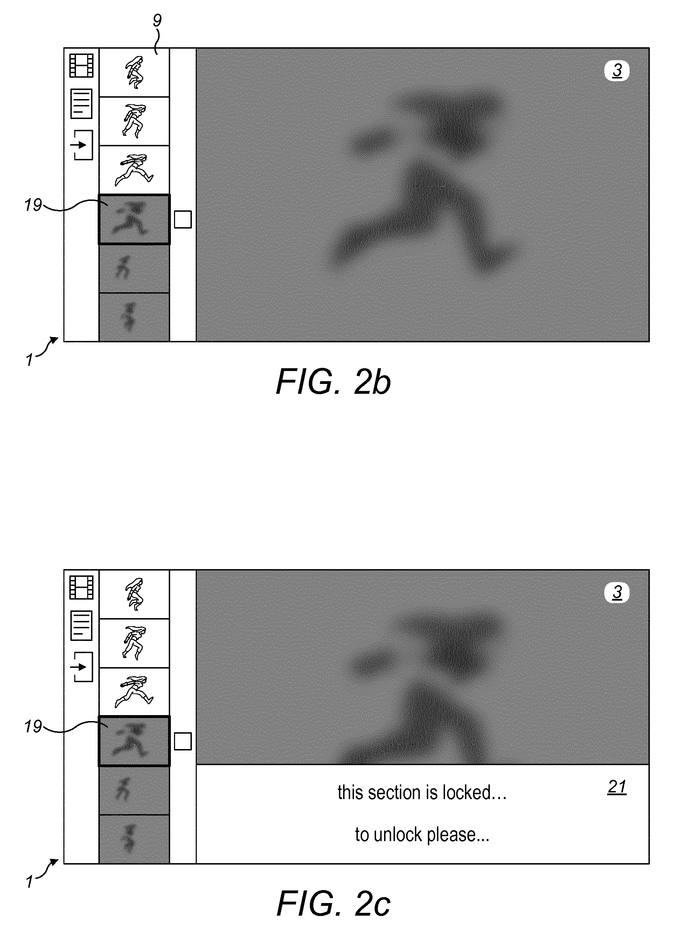

The fraim in Figure 2a is shown displaying a clear, uncamouflaged video of a woman running in window 3. Window 9 is shown with a number of key frames, which are smaller versions of what is displayed in window 3 during particular parts of the video. Key frame 19 is outlined, as this is the key frame corresponding to the content shown in Figure 2a in window 3. Figure 2b shows a fraim displaying in window 3 a camouflaged version of the content being displayed shown in Figure 2a; the camouflage is effective to hide the detail in the picture, however the rough outline of the picture can be ascertained - as if the picture were being viewed through frosted glass, hence we often refer to this camouflaging process as "frosting", though this is not the only camouflaging technique. The key frame 19 in window 9 is also "frosted", or camouflaged, as are the subsequent key frames, which indicates that the video is camouflaged from key frame 19 onwards. It is important that the camouflaging or frosting process results in content which has less detail or data than does the original content, provided that the reduction is sufficient, it becomes impossible to recreate the original content to any degree of accuracy from the camouflaged content because the camouflaged version does not contain enough information for any process to extrapolate, interpolate or otherwise retrieve the original content (in much the same way that it is not possible to obtain a focussed image from a blurred negative).

Figure 2c shows the same fraim as in Figure 2b, but the window 3 is now also displaying a "call to action" (CTA) interface 21 within the fraim, or main GUI. The CTA interface displays instructions for a user explaining what must be done to access the camouflaged content (e.g. make a payment, answer a survey, provide information, etc.). The CTA interface is enabled with the necessary functionality for the user to carry out the action(s) necessary to have access to the camouflaged content and, once these actions have been completed, the GUI will allow the user to access the original, uncamouflaged version of the digital media (but not to copy or redistribute the uncamouflaged version);this can be conveniently effected by the automatic "refreshing" of the display. The uncamouflaged content is stored separately from the camouflaged version of the digital media, preferably on a specific server, which will allow the restricted access necessary to protect the content from unauthorised use. Because the similarity GUI remains the same, the user is not made aware that he is being redirected to a different version of the digital media, which may be stored on a completely different website or server, all that is experienced is that the displayed digital media access interface changes from one with certain functionality and displaying a camouflaged version, to one which displays an uncamouflaged version but which has different functionality (i.e. it restricts copying, downloading or any other unauthorised usage).

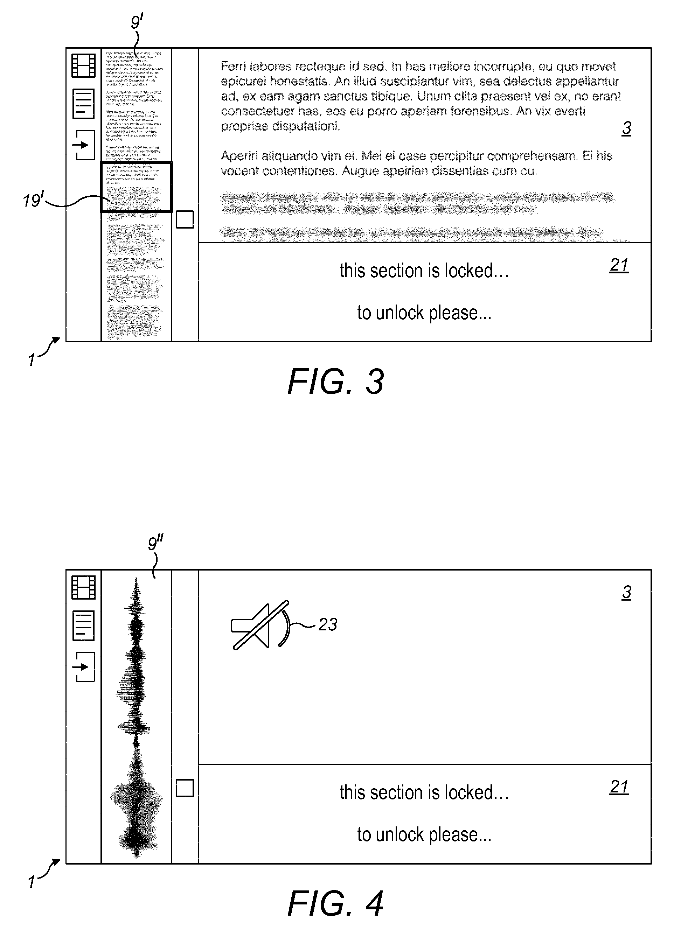

Figure 3 shows the interface or fraim 1 of Figure 1 displaying text (which could be the transcript of a video or sound recording); the text has been camouflaged, and the window 3 is displaying a CTA 21. The window 9' displays a reduced size version of the complete text, and the key frame marker 19' corresponding to the section of text being displayed in window 3 does not "jump" from key frame to key frame as in Figures 2a to 2d, but instead scrolls down with the timeline marker 9. As can be seen in window 3, the displayed text is legible up to a point, after which it is too blurred to read. There could also be an audio recording of the text being read aloud, which could be accessed by an icon on the toolbar 11; this recording would be synchronised with the text display, so that as the recording played the key frame marker 19' would move downwardly and the window would display the text being spoken.

Figure 4 shows the interface or fraim 1 of Figure 1 being used to access an audio recording in which there is no associated visual content. In this case, the window 3 displays a "mute" symbol 23 corresponding to the camouflaged portion of the recording currently being played (it may also display other matter, such as a logo, advertising material, or visual content which is unrelated to the audio recording, e.g. to entertain a user), and there is a CTA 21. Window 9 displays a waveform 9" corresponding to the recording, the camouflaged portion of which (alongside CTA 21) is suitably blurred.

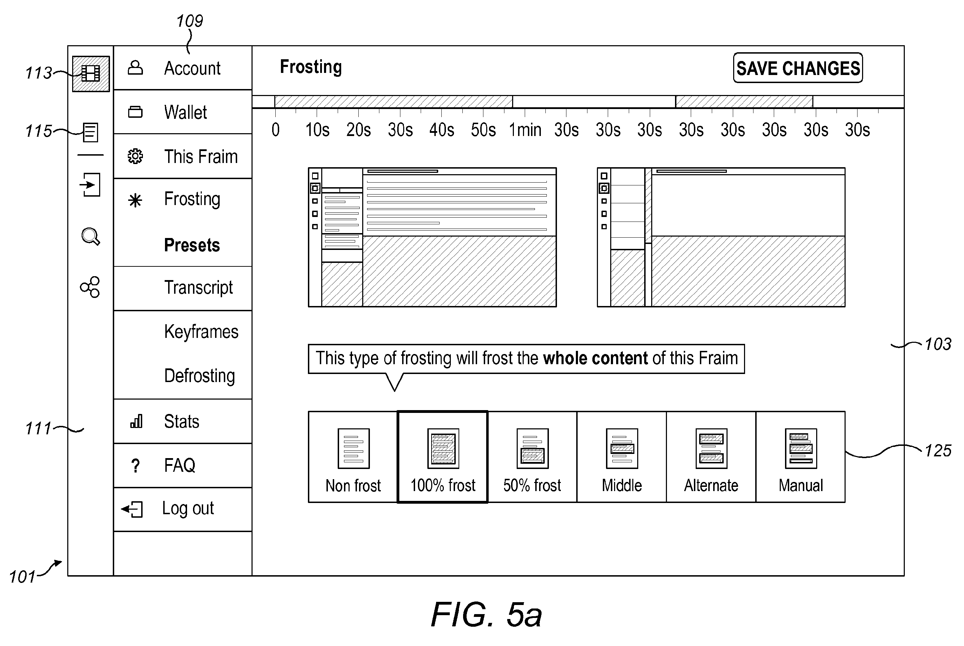

Figures 5a to 5c show a different fraim, or GUI, 101, illustrating the process of frosting or camouflaging content and the application of a CTA; this requires that the user have access to functions not available to casual users who merely want to view/play the camouflaged media file. The user would have to be logged in so as to access the additional functionality of the system, and the different functionality means that there are some differences in the appearance of the fraim 101 which would be visible to such a user, compared to the fraim 1 visible to a casual, non-logged in user. Each fraim 101 in Figures 5a to 5c has a main window 103, an auxiliary window 109 displaying various functions for selection (including, at the bottom, a logout button), and a toolbar 111 incorporating various icons 113, 115 (which may be the same as, or merely include, the icons in fraim 1); for clarity, not all of these elements are referenced in every drawing.

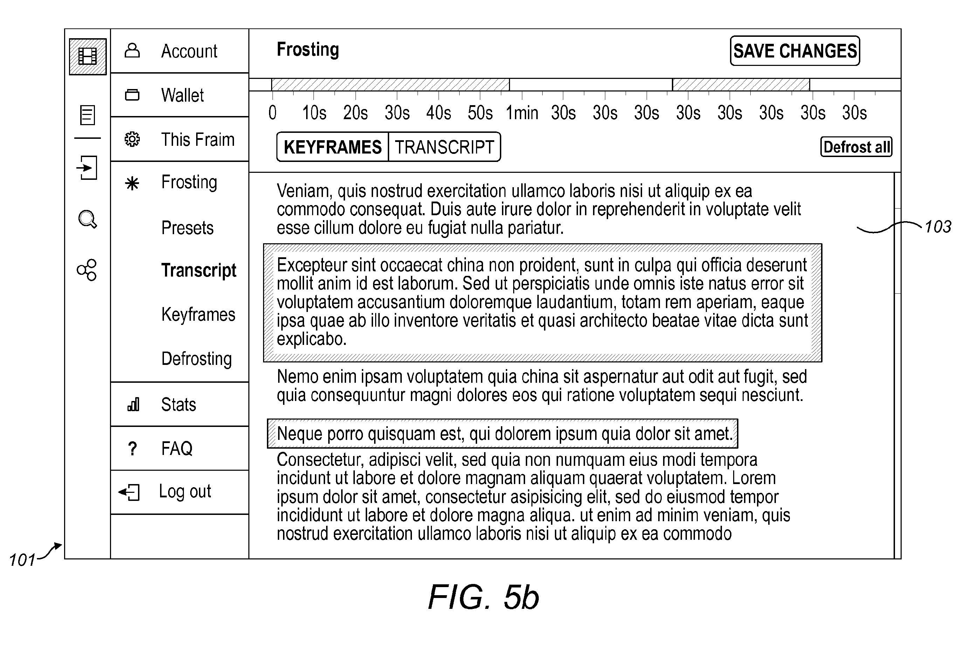

Figure 5a shows the process of applying camouflage to a digital media file, in this case a text file (the user having clicked on the text icon 113). In this case, the user has actuated the automatic frosting function in auxiliary window 9, and is presented with camouflage options in table 125 which are, from left to right, no frosting, frosting of 100% or 50% of the content of the file, frosting of the middle portion of the text, frosting of alternate paragraphs of the text and manual frosting (described below in connection with Figure 5b). The user has selected, or the user's pointer is hovering over the second of these options, and the window 103 displays an explanation as to what the system will do; the system is programmed to carry out the selected camouflaging, in this case it will camouflage all of the content of the fraim 101. In Figure 5b the user has selected manual frosting, and so the window 103 is displaying the text content of the digital media file so that the user can scroll through it and highlight in the usual manner the portions which are to be camouflaged.

Figure 5a shows the process of applying a CTA to a camouflaged digital media file, in which the window 103 is displaying options for third parties to access the uncamouflaged file of payment or the submission of an email address; the logged in user has selected the former, and there is a dialog box 127 explaining how payment may be made and an amount box 129 which the user fills in according to how much is to be charged to access the media.

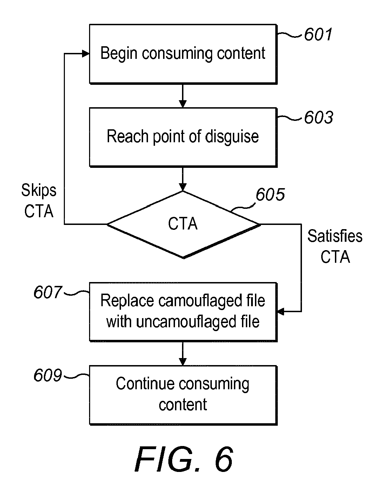

Figure 6 shows the process undergone by a third party when accessing a digital media file *via* a digital media access interface in accordance with the invention. The third party discovers the file, for example on a website, or receives a link to it in an email, and begins accessing the content 601 (not necessarily aware that some of the content is camouflaged). When the start of the camouflaged content is reached 603, the third party is presented with a CTA, which the content owner/creator or someone acting on his behalf has previously applied to media file. The third party can satisfy the CTA or not 605: if he does he is redirected to the uncamouflaged version of the file 607 and, when he reaches the start of the camouflaged content he simply continues accessing the content 609 (the third party may not only be able to access to the uncamouflaged content, but also he may be taken or otherwise directed to the same point reached in the uncamouflaged version when the CTA arose in the camouflaged version). If the third party does not satisfy the CTA then he is not allowed complete, clear access to the camouflaged version of the content; instead he is either directed to the next uncamouflaged section of content to begin the process at 601 (where the camouflaged section does not extend to the end of the content), or (where the camouflaged section extends to the end of the content) he is returned to the start of an earlier section of uncamouflaged content 601. In the process of accessing the uncamouflaged file, the system records the unique identifier associated with the camouflaged file; in this way, the system can record the number of times an uncamouflaged media file has been accessed, and *via* which camouflaged media file. This is useful for revenue sharing purposes, as described below.

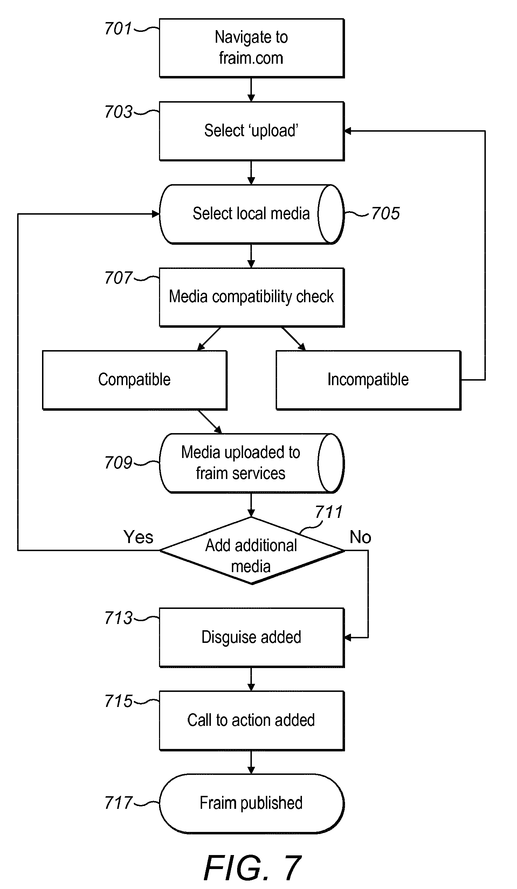

Figure 7 shows the process by which an owner or creator of a digital media file can upload the file in accordance with the invention. The programme which the owner/creator can use in connection with this process is made available on the internet at our website (referred to in the drawing as "fraim.com) to subscribers/members. The owner/creator first navigates to the website 701, and there logs in as a subscriber/member. The next step 701 is to select upload, and then to identify the format 705 of the digital media file to be uploaded; the system then checks 707 that that format is compatible with those catered for by the system. If it is not, the user is returned to step 703 and invited to upload the media in a compatible format; if the format is compatible, the media is uploaded to the relevant server 709. The user is then asked 711 if it is desired to upload additional digital media; this is media which is associated with the media uploaded at step 709, such as the soundtrack to a film, etc. If additional media is to be uploaded, the user is returned to step 705 to upload it, etc. If no additional media is to be uploaded, the user is prompted 713 to add camouflage (or "a disguise"), and this is carried out as described above. At this stage the system also adds a unique identifier to the camouflaged digital media file. The user is then prompted 715 to add a call to action, and a CTA interface is added as described above. If the user wishes third parties to be able to distribute the content (referred to below as "promoters"), he may also input into the CTA interface instructions and/or terms and conditions under which he is willing to allow this to take place; this information is also held in the server containing the uncamouflaged media file and accessed *via* the digital media access interface. Finally, the system provides the user with the camouflaged digital media file for publishing 717 complete with unique identifier, CTA interface and information linking the camouflaged file to the original, uncamouflaged file which was uploaded to the server at step 709. The user is now free to take the camouflaged file and publish it wherever required so that third parties can access it; if those third parties wish to copy the camouflaged file and publish it elsewhere (to "promote" the content), the necessary information is available to the promoter *via* the CTA interface. In practice, the promoter will be directed to the server storing the original, uncamouflaged media file, there to agree and "sign up" to the terms and conditions set by the content owner/creator and, once this has been done, the system will through the digital media access interface provide the promoter with access to the camouflaged digital media file which now has a new unique identifier; the promoter is then free to publish that camouflaged file wherever he wishes (so long as this is permitted by the terms and conditions for promoting the content set by its owner), and when the promoted camouflaged file is accessed by users who then access the uncamouflaged version, the system can distinguish how access was gained by way of the unique identifiers.

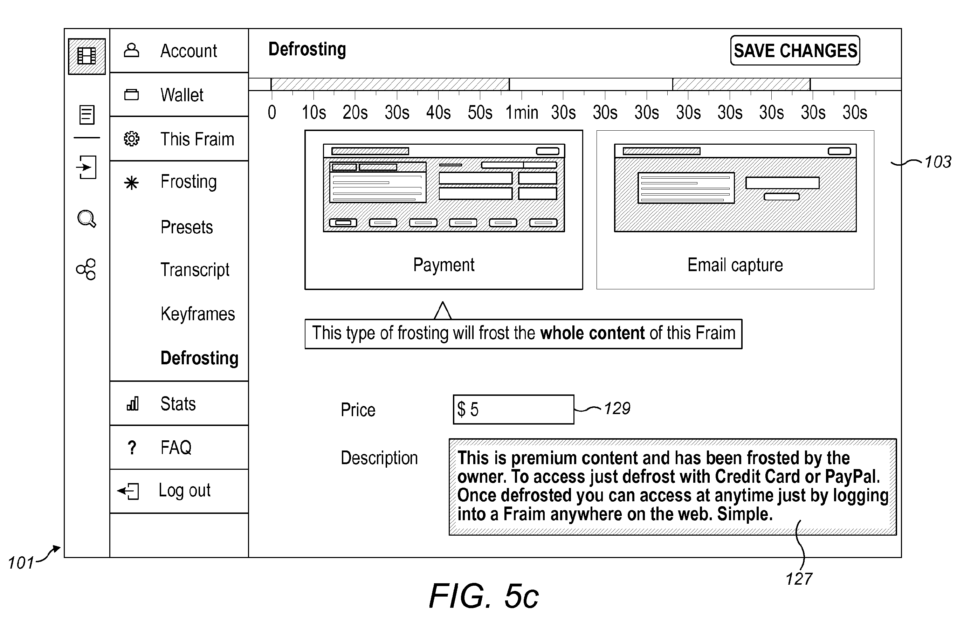

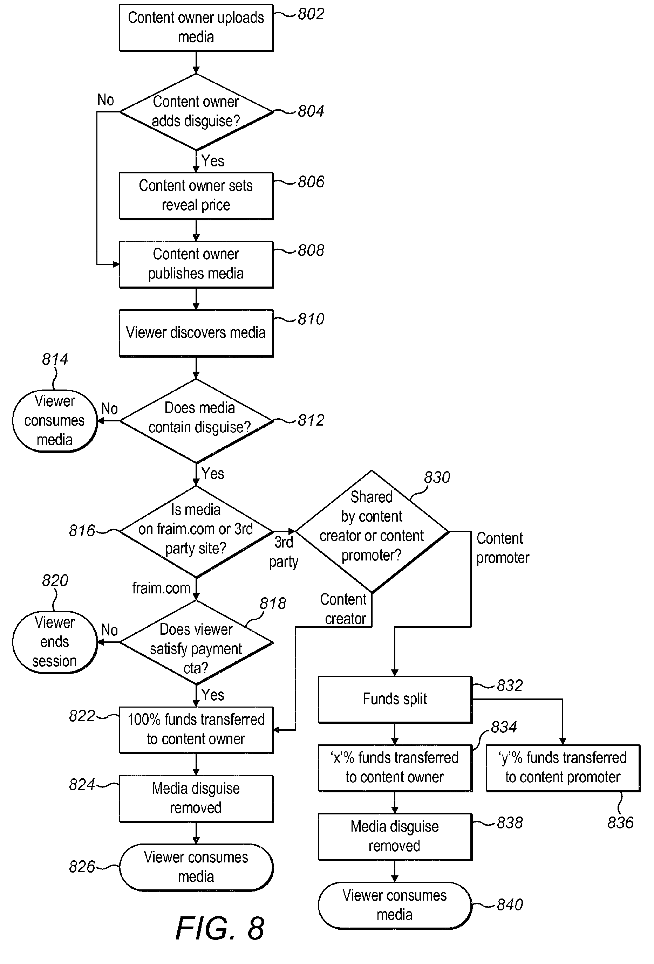

Figure 8 shows the revenue sharing process enabled in accordance with the invention. In the first step 802, the content owner/creator uploads the digital media to the fraim.com server as described above; the content owner decides whether or not the content should be camouflaged (or "disguised") 804: if it is to be disguised, the process described above (particularly in connection with Figures 5 and 7) is followed; the owner is also prompted 806 to provide the CTA interface requirements, also as described above (which may be to "set a reveal price"), and then the owner publishes the camouflaged media file 808 complete with the unique identifier added by the system. If the owner does not wish to disguise any of the content at step 804 and so to allow unrestricted use of the content, he goes direct to step 808 - though the system adds a unique identifier to the media file, for tracking subsequent use/distribution of the content. When a third party discovers the published camouflaged digital file at 810, if it contains no camouflaged parts it is free for use and the third party can access and use it 814 in the same way as anything else made freely available on the internet. If the media is on the fraim.com website 816, the third party (or "viewer") has to satisfy the CTA interface requirements 818; if he does not, the session is ended 820. If the third party does satisfy the CTA interface requirements then the system records 822 that 100% of any fee paid by the third party should be allocated to the content owner, the "disguise is removed" 824 (i.e. the third party is redirected to the uncamouflaged file as described above) and the third party accesses the uncamouflaged content 826.

If the media discovered at step 810 is not on the fraim.com website, but instead on a third party website, once the third party has satisfied the CTA interface requirements the system assesses 830 whether or not there is a revenue sharing agreement between the content owner and the promoter who has loaded the camouflaged content on the third party website, and if there is what the revenue share is. This information will be associated with the respective unique identifier. If there is no share of revenue, so that the owner retains all revenues, then the process moves to step 822. If revenue sharing has been agreed, with X% of the revenue to go to the owner and Y% to go to the promoter, then at step 834 the funds are split and transferred accordingly at 834 and 836, the third party is directed 838 to the original, uncamouflaged digital media file and accesses the uncamouflaged content 840.

It will of course be understood that many variations may be made to the above-described embodiment without departing from the scope of the present invention. For example, Figures 1 to 5 show the toolbar, the auxiliary window and the timeline located to the left hand side of the fraim, however they could all be located elsewhere in the GUI, not necessarily along an edge, and they could be located in different places to each other. The percentage revenue shares described above are purely exemplary, revenues could be shared in any proportions, and between three or more parties (those skilled in the art will appreciate how the systems and processes described above could be "cascaded", i.e. extended to cater for promoters at subsequent levels, i.e. sub-promoters, and so on. The invention also provides a method of sharing the revenue when publishing media files, the method comprising preparing a camouflaged digital media file with a unique identifier and a CTA interface as described above, associating instructions and/or the terms and conditions for allowing third parties to promote the camouflaged media data file with the CTA interface and/or with the first, uncamouflaged digital media file, publishing the camouflaged file and, when a would be promoter follows the instructions and agrees to the terms and conditions, providing the promoter with a new camouflaged digital media file having a new unique identifier. Where different variations or alternative arrangements are described above, it should be understood that embodiments of the invention may incorporate such variations and/or alternatives in any suitable combination.

## Claims

1. A method of preparing a first digital media file containing visual and/or audio information for distribution, the method comprising:
i. copying the digital media file to create a second media file;
ii. selecting at least one part of the second digital media file;
iii. removing the at least one part from the remainder of the second digital media file;
iv. processing the at least one part so as to camouflage the information therein, and
v. inserting the at least one processed part into the remainder of the second digital media file to create a camouflaged digital media file, at least one part of which is camouflaged and which occupies the same position from which it was removed.

2. The method according to Claim 1 comprising applying to the camouflaged digital media file a Call to Action ("CTA") interface which comprises requirements for third parties who wish to access the first digital media file.

3. The method according to any Claim 1 or Claim 2 further comprising applying a unique identifier to the camouflaged digital media file, the first digital media file and/or the CTA interface.

4. A method of sharing a first digital media file containing visual and/or audio information with third parties through a network, the method comprising:
preparing a camouflaged digital media file according to Claim 3 when dependent on Claim 2; storing the first digital media file separately from the camouflaged digital media file, allowing unrestricted access to the camouflaged second digital media file via a digital media interface, presenting a viewer of the camouflaged digital media file with the CTA requirements and, when these have been satisfied, allowing the viewer restricted access to the first digital file, *via* the digital media access interface.

5. The method according to Claim 5 comprising preventing third parties from copying the first digital media file.

6. The method according to Claim 5 or 6 comprising preventing third parties from identifying the location of the first digital media file.

7. The method according to any of any one of Claims 5 to 8 further comprising recording the unique identifier associated with the camouflaged digital media file, the first digital media file and/or the CTA satisfied by the or each third party allowed access to the first digital media file

8. A computer-readable medium programmed to execute the method of any preceding claim.

9. A system for preparing a first digital media file containing visual and/or audio information for distribution, the system being adapted to:
i. copy the digital media file to create a second media file;
ii. select at least one part of the second digital media file;
iii. remove the at least one part from the remainder of the second digital media file;
iv. process the at least one part so as to camouflage the information therein;
v. insert the at least one processed part into the remainder of the second digital media file to create a camouflaged digital media file, at least one part of which is camouflaged and which occupies the same position from which it was removed,
vi. and apply to the camouflaged digital media file a unique identifier, and a Call to Action ("CTA") interface adapted to receive inputs from third parties who wish to access the first digital media file,
wherein the CTA interface contains predetermined requirements for a third party to be allowed access to the first digital media file and wherein a digital media access interface is provided which is adapted to allow a third party restricted access to the first digital media file if or once the third party has satisfied the CTA requirements.

10. A system according to Claim 9 wherein the predetermined requirements comprise predetermined attributes of the third party and wherein the CTA interface and/or the digital media access interface is adapted to sense attributes of the third party.

11. A system according to Claim 9 or Claim 10 wherein the digital media access interface is adapted to display the camouflaged digital media file and to replace this display by displaying the first digital media file only when the predetermined requirements have been satisfied.

12. A system according to any one of Claims 9 to 11 wherein the digital media access interface is adapted to prevent third parties from copying the first digital media file, and/or to prevent third parties from identifying the location of the first digital media file.

13. A system according to any one of Claims 9 to 12 wherein the first digital media file comprises different forms of time-varying media, wherein the digital media access interface is adapted to synchronise the different media forms, and/or to allow third parties accessing the camouflaged digital media file to access any combination of the different synchronised media forms.
